# FASCICULE DE BREVET EUROPEEN

(11) **EP 1 585 071 B1**
(45) Date de publication et mention de la délivrance du brevet: **18.06.2008**
(21) Numéro de dépôt: 05102805.8
(22) Date de dépôt: 08.04.2005
(51) Int. Cl.: G06F 12/14

(54) **Partage de fichiers non divisibles**
Gemeinsamer Dateizugriff an unteilbaren Dateien
Non-divisible Files Sharing

(30) Priorité: 09.04.2004 FR 0450726
(43) Date de publication de la demande: 12.10.2005
(73) Titulaire: PROTON WORLD INTERNATIONAL N.V., 1930 ZAVENTEM (BE)
(72) Inventeur: Ingels, Didier, 1367, GRAND ROSIERE (BE); Restiau, Guy, 1330, RIXENSART (BE)
(74) Mandataire: de Beaumont, Michel

(56) Documents cités:
- EP-A- 0 908 855
- FR-A- 2 635 890

## Description

La présente invention concerne de façon générale les fichiers de données numériques enregistrés dans une mémoire et, plus particulièrement les fichiers à sections non divisibles, c'est-à-dire dont l'enregistrement physique dans une zone mémoire s'effectue par section de longueur fixe ou de façon linéaire.

L'invention concerne plus particulièrement la gestion des accès à des fichiers en fonction de droits (écriture, lecture, effacement, copie, etc.) donnés à des utilisateurs ou à des applications. De tels droits sont fonction de clés ou codes qui sont attribués aux différents utilisateurs ou aux différentes fonctions ou applications.

La présente invention s'applique plus particulièrement au domaine des cartes à puces ou analogues pour lesquelles le système de fichiers traite des sections de taille fixe et non divisibles.

Aujourd'hui, une clé conditionnant des droits d'accès à un fichier ayant pour paramètre de devoir être écrit, de façon non divisible par section ou de façon linéaire, ne peut être affectée qu'au fichier entier ou à une section de ce fichier. La répartition des droits d'accès doit être compatible avec la granularité (taille minimale) de chaque bloc (section) lu ou écrit dans la mémoire.

Cette contrainte n'est que peu gênante dans des applications où la mémoire est quasi illimitée (disque dur d'ordinateur, par exemple). Toutefois, dans des applications de type carte à puce, ou plus généralement dès que la taille de la mémoire est critique par rapport au volume d'informations à stocker, la granularité des sections de fichier est souvent un frein à l'accroissement du nombre d'applications que peut traiter le système.

Par exemple, dans le cas d'une carte à puce sans contact (transpondeur) appliquée à la gestion de titres de transport, les systèmes de gestion (taille des informations exploitées, nombre de catégories de droits d'accès différents, etc.) sont souvent différents d'un réseau à l'autre (d'une ville à l'autre, d'un opérateur à un autre, d'un pays à un autre, etc.). Pour qu'une même carte à puce puisse fonctionner sur plusieurs réseaux, elle doit comporter autant de fichiers que de réseaux, chaque fichier étant dédié à un réseau.

Le document FR2635890 décrit un système de mémoire dans une carte à puces qui utilise une table de descriptifs de zones respectivement allouées à différentes applications, définissant l'adresse de départ, la taille ainsi que les droits d'accès de chaque zone de mémoire. Cependant la mémoire est découpée en zones disjointes, non partagées entre les différentes applications.

Une telle limitation réduit les possibilités de partage d'une carte à puce entre plusieurs applications.

Les mêmes problèmes se posent, même pour des sections de taille variables, si l'écriture des fichiers est linéaire, c'est-à-dire non divisible à volonté. Pour simplifier, on fera par la suite référence à la granularité de données dans une mémoire pour désigner la taille minimale des sections indivisibles qui peuvent y être lues ou écrites. Toutefois, tout ce qui sera décrit en relation avec la granularité s'applique à des sections de taille variable à écriture linéaire.

Une solution serait de diminuer la granularité des sections de la mémoire (à l'extrême jusqu'au bit) en fonction de la taille minimale des informations auxquelles on souhaite donner des droits d'accès particuliers. Une telle solution théorique n'est toutefois pas envisageable en pratique pour plusieurs raisons.

Tout d'abord, cette solution nécessiterait une modification des dispositifs de gestion de la mémoire (contrôleur d'accès mémoire direct ou DMA), voire de la structure de la mémoire (granularité des amplificateurs d'entrée-sortie).

De plus, la gestion des droits d'accès nécessiterait d'affecter une clé à chaque élément de granularité minimale. Cela multiplierait le nombre de clés et nécessiterait, rien que pour gérer les droits, une mémoire de taille supérieure à la mémoire contenant les informations.

En outre, l'utilisateur ou l'application devant accéder devrait posséder autant de clés que de sections. Un tel système deviendrait par conséquent vite ingérable.

La présente invention vise à pallier un ou plusieurs des inconvénients des systèmes connus de gestion de fichiers à écriture linéaire ou par sections non divisibles.

L'invention vise plus particulièrement à proposer une solution pour partager un même fichier entre différents systèmes.

L'invention vise également à rendre la gestion des droits d'accès indépendante (en termes de taille de données) de la granularité des données dans une mémoire.

Pour atteindre ces objets ainsi que d'autres, la présente invention prévoit un procédé de partage de fichiers à enregistrement par sections non divisibles dans une première mémoire, consistant à :
découper chaque section en sous-ensembles auxquels sont respectivement affectés des droits d'accès propres ;
stocker, dans une deuxième mémoire, distincte de la première, une table de descriptifs comprenant au moins la localisation de chaque sous-ensemble dans la section, au moins une clé conditionnant l'accès à ce sous-ensemble et les droits affecté à la clé ; et
conditionner les accès audits sous-ensembles à leurs descriptifs respectifs par un contrôle effectué par un microprocesseur.

Selon un mode de mise en oeuvre de la présente invention, lesdits fichiers sont transférés entre ladite première mémoire et une troisième mémoire par sections entières, le contrôle d'accès étant effectué à partir du contenu de la troisième mémoire.

Selon un mode de mise en oeuvre de la présente invention, la localisation comprend :
une valeur de décalage du début du sous ensemble par rapport au début de la section ; et
la longueur du sous-ensemble.

Selon un mode de mise en oeuvre de la présente invention, le descriptif d'un sous-ensemble comprend en outre une information sur le type de données qu'il contient.

Selon un mode de mise en oeuvre de la présente invention, les sous-ensembles d'une même section sont imbriqués les uns dans les autres.

L'invention prévoit également un système de partage de fichiers à enregistrement par sections non divisibles dans une première mémoire, caractérisé en ce qu'il comprend :
un microprocesseur de gestion des accès aux données contenues dans les sections par sous-ensembles auxquels sont respectivement affectés des droits d'accès propres ;
une deuxième mémoire, distincte de la première, contenant au moins une table de descriptifs comprenant au moins la localisation de chaque sous-ensemble dans la section, au moins une clé conditionnant l'accès à ce sous-ensemble et les droits affectés à la clé.

Selon un mode de réalisation de la présente invention, le système comprend en outre une troisième mémoire de transfert, par sections entières, des informations contenues dans les fichiers.

Selon un mode de réalisation de la présente invention, la troisième mémoire est une mémoire cache, la deuxième mémoire étant une mémoire non volatile.

L'invention prévoit en outre une carte à puce comprenant un système de partage de fichiers.

Ces objets, caractéristiques et avantages, ainsi que d'autres de la présente invention seront exposés en détail dans la description suivante de modes de mise en oeuvre et de réalisation particuliers faite à titre non-limitatif en relation avec les figures jointes parmi lesquelles :
la figure 1 représente, de façon très schématique et sous forme de blocs, un exemple de dispositif de type carte à puce auquel s'applique la présente invention ;
la figure 2 représente un exemple de découpage d'une section de fichier en sous-ensembles selon un mode de mise en oeuvre de la présente invention ; et
la figure 3 illustre un exemple de table de descriptifs selon un mode de mise en oeuvre de la présente invention.

Les mêmes éléments ont été désignés par de mêmes références aux différentes figures. Pour des raisons de clarté, seuls les éléments qui sont nécessaires à la compréhension de l'invention ont été représentés aux figures et seront décrits par la suite. En particulier, la génération des clés conditionnant les droits d'accès aux différentes sections n'a pas été détaillée, l'invention étant compatible avec tout système classique d'affectation de clés.

Une caractéristique de la présente invention est de découper chaque section de fichier en sous-ensembles indépendants les uns des autres et définis par un rang (position) de bit de début dans la section et une longueur (nombre de bits). Une autre caractéristique de l'invention est d'affecter à chaque sous-ensemble des droits d'accès conditionnés par une ou plusieurs clés.

Selon l'invention, le mode de lecture-écriture des fichiers dans la mémoire n'est pas modifié. C'est une fois que les sections sont exploitables directement par le processeur exploitant les données, plus précisément dans des registres ou une mémoire cache, que l'invention opère le traitement par sous-ensemble.

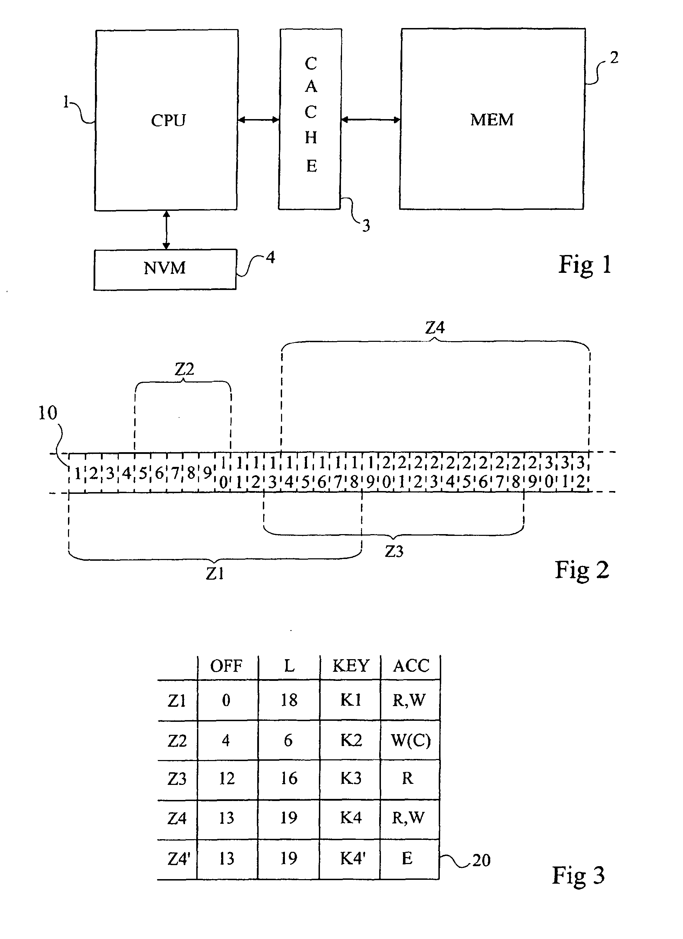

La figure 1 représente, de façon très schématique et sous forme de blocs, un exemple de carte à puce pour la mise en oeuvre de la présente invention.

Dans cet exemple, un processeur 1 (CPU) a pour rôle d'exécuter des applications (programmes) à partir de données stockées dans une mémoire 2 (MEM). La mémoire 2 est, par exemple, une mémoire dans laquelle les données sont stockées par mots de 32 bits qui constitue la taille minimale (granularité) de section susceptible d'y être lue ou écrite. Au sens de la présente invention, le terme données englobe tout type de données numériques quelle que soit leur destination. En particulier, bien que ces données dont on souhaite contrôler l'accès constituent préférentiellement des données exploitées par des programmes, cette désignation englobe les programmes eux-mêmes qui, du point de vue de la mémoire 2, sont des bits à lire et écrire.

De façon classique, une mémoire cache 3 (CACHE) ou une banque de registres sert de tampon entre la mémoire 2 et le processeur 1. La gestion des échanges entre la mémoire cache 3, la mémoire 2 et le processeur 1 est à la portée de l'homme du métier et reprend un fonctionnement classique. En figure 1, les liaisons d'échange de données ou de commande ont été symbolisées par des flèches. En pratique, ces informations transitent généralement par un ou plusieurs bus partagés ou non, mais cela n'a pas d'incidence sur l'invention.

L'invention tire profit de la présence de cet élément de mémorisation intermédiaire (cache ou registres) entre la mémoire 2 et le processeur 1, généralement prévu pour des questions de rapidité, pour diviser en sous-ensembles les données lorsqu'elles sont dans cette "mémoire intermédiaire".

Du point de vue de la sécurité par rapport aux contrôles d'accès définis par les clés affectées aux différents sous-ensembles, l'invention n'engendre aucune fragilité dans la mesure où la mémoire cache est associée au processeur, c'est-à-dire qu'elle peut être considérée comme étant dans une zone aussi sûre (tamper resistant) que le processeur lui-même.

Selon l'invention, une table de correspondance est stockée, dans une zone de la mémoire 2 pour transfert dans la mémoire 3 avant toute exploitation des données, ou préférentiellement dans une zone d'une mémoire non volatile 4 (NVM) de la puce. Cette table contient, selon l'invention et pour chaque sous-ensemble, un descriptif du sous-ensemble en termes de localisation et de droits d'accès. Ainsi, pour chaque sous-ensemble, le descriptif stocké dans la table comprend au moins une position de départ (position du premier bit du sous-ensemble dans la section du fichier) et une longueur (nombre de bits du sous-ensemble). La position de départ peut être exprimée sous la forme d'un décalage (offset) par rapport au premier bit de la section. Le descriptif contient également, en relation avec chaque sous-ensemble, une catégorie de droits d'accès et, de préférence, un type de données concerné (compteur, données libres, date, etc.). Cette dernière information optimise le contrôle d'accès en autorisant une vérification non seulement de la clé mais également du type de données. Pour simplifier, on fera référence par la suite aux droits d'accès pour désigner indifféremment les opérations faites sur les données et le type de données concernées, contrôler le type de données revenant en fait à spécialiser (ajouter une condition à) un droit d'accès en écriture.

Le découpage de chaque section de fichier opéré par l'invention peut conduire indifféremment à des sous-ensembles constitués de suites de bits disjointes, à des sous-ensembles imbriqués, etc.

La figure 2 illustre, par une représentation schématique d'une section 10 de bits stockés dans une mémoire, un exemple de mise en oeuvre de la présente invention.

La figure 3 représente un exemple de table 20 contenant les descriptifs des sous-ensembles de la figure 2.

Dans l'exemple de la figure 2, quatre sous-ensembles Z1 à Z4 ont été définis dans une section de 32 bits constituant un mot stockable de façon indivisible dans la mémoire (2, figure 1). Pour simplifier les bits ont été désignés de 1 à 32. Les sous-ensembles Z1 à Z4 incluent respectivement les bits 1 à 12, 5 à 10, 13 à 28 et 14 à 32.

A chaque sous-ensemble sont affectés des droits d'accès particuliers qui sont conditionnés à la fourniture d'au moins une clé (KEY, figure 3). Dans l'exemple considéré, des clés K1 à K3 sont affectés aux sous-ensembles respectifs Z1 à Z3. On suppose que deux clés K4 et K4' conditionnent des droits différents sur un même sous-ensemble Z4. Cela revient au même que de considérer l'existence de deux sous-ensembles Z4 et Z4' de même coordonnées auxquels sont respectivement affectées les clés K4 et K4'.

Ainsi, dans la table de la figure 3, les décalages initiaux respectifs (OFF) des sous-ensembles sont 0, 4, 12, 13 et 13 et leurs longueurs respectives (L) sont 18, 6, 16, 19 et 19.

Les droits respectifs sont, lecture (R) et écriture (W) pour la zone Z1, écriture en mode compteur (WC) dans la zone Z2, lecture (R) dans la zone Z3, lecture (R) et écriture (W) dans la zone Z4, effacement (E) dans la zone Z4'. Pour simplifier, la spécification du type de données a été mélangée à la clé. En pratique, on préférera toutefois distinguer un code indicateur du type de données du droit d'accès proprement dit.

D'autre accès et types que ceux donnés ci-dessus en exemple sont bien entendu possibles.

De même, les clés peuvent correspondre à des mécanismes de sécurité différents les uns des autres. Par exemple, certaines clés peuvent être internes au dispositif (la carte à puce), d'autres peuvent être saisies par l'utilisateur alors que la carte est dans un lecteur. D'autres encore peuvent provenir d'un dialogue avec un système distant (par exemple un serveur connecté au lecteur) sur la base d'un mécanisme à clés publique et privée.

Un avantage de la présente invention est que la section non divisible stockable dans la mémoire (ici, 32 bits) peut désormais être gérée comme plusieurs zones différentes les unes des autres et sur lesquelles les droits d'accès sont différents. La sélection, dans la section, des bits du sous-ensemble considéré, s'effectue dans la mémoire cache (3, figure 1) où la section est entièrement disponible. En d'autres termes, la gestion des droits d'accès n'est plus effectuée lors du transfert vers ou depuis la mémoire 2, mais alors que les informations sont dans la mémoire cache associée à l'unité centrale. Cela permet, entre autres, de respecter les contraintes de rapidité de gestion des droits d'accès requises par la plupart des applications.

En reprenant l'exemple des cartes à puce dans le domaine du transport (gestion des titres de transport), il n'est désormais plus nécessaire d'affecter un fichier (une section) par système ou ville. Une même section peut être partagée par plusieurs systèmes auxquels sont respectivement affectés des sous-ensembles différents. Ainsi, un même produit fini (carte à puce) de capacité mémoire limitée peut servir, par exemple, dans plusieurs villes.

Un autre avantage de l'invention est que l'organisation du partage des fichiers est indépendante de la mémoire (2) dans laquelle ils sont stockés, sauf pour ce qui concerne la taille des sections. En effet, que ce soit dans le sens lecture (mémoire 2 vers unité centrale 1) ou écriture (unité centrale 1 vers mémoire 2) les sections sont toujours transférées entières depuis ou vers la mémoire 2, la gestion des accès par sous-ensemble étant effectuée au niveau de la mémoire cache 3. La gestion de mémoire proposée par l'invention est ainsi adaptable à de multiples systèmes.

Bien entendu, la présente invention est susceptible de diverses variantes et modifications qui apparaîtront à l'homme de l'art. En particulier, la programmation d'une carte à puce ou de tout élément électronique analogue pour la mise en oeuvre de l'invention est à la portée de l'homme du métier à partir des indications fonctionnelles données ci-dessus. De plus, la modification éventuelle de l'élément électronique pour qu'il contienne la table d'affectation de l'invention est également à la portée de l'homme du métier. En outre, bien que l'invention ait été décrite en relation avec un exemple particulier à des fichiers de taille fixe pour ce qui concerne leur lecture-écriture dans la mémoire, la transposition de l'invention à des fichiers de taille variable mais à lecture-écriture linéaire (ce qui revient à une lecture-écriture par bloc pour ce qui est des transferts dans la mémoire cache du processeur), ne posera pas de difficulté à l'homme du métier.

## Revendications

1. Procédé de partage de fichiers à enregistrement par sections non divisibles dans une première mémoire (2), dans lequel :
- chaque section (10) est découpée en sous-ensembles (Z) auxquels sont respectivement affectés des droits d'accès propres (ACC) ;
- une table (20) de descriptifs comprenant au moins la localisation (OFF, L) de chaque sous-ensemble dans la section, au moins une clé (K) conditionnant l'accès à ce sous-ensemble et les droits (ACC) affectés à la clé, est stockée dans une deuxième mémoire (4) distincte de la première ; et
- les accès auxdits sous-ensembles sont conditionnés à leurs descriptifs respectifs par un contrôle effectué par un microprocesseur (1),
**caractérisé en ce que** les sous-ensembles (Z) d'une même section (10) sont imbriqués les uns dans les autres.

2. Procédé selon la revendication 1, dans lequel lesdits fichiers sont transférés entre ladite première mémoire (2) et une troisième mémoire (3) par sections entières, le contrôle d'accès étant effectué à partir du contenu de la troisième mémoire.

3. Procédé selon la revendication 1, dans lequel la localisation comprend :
une valeur de décalage (OFF) du début du sous ensemble (Z) par rapport au début de la section (10) ; et la longueur (L) du sous-ensemble.

4. Procédé selon la revendication 1, dans lequel le descriptif d'un sous-ensemble comprend en outre une information sur le type de données qu'il contient.

5. Système de partage de fichiers à enregistrement par sections non divisibles dans une première mémoire (2), comprenant :
- un microprocesseur (1) de gestion des accès aux données contenues dans les sections par sous-ensembles auxquels sont respectivement affectés des droits d'accès propres (ACC) ;
- une deuxième mémoire (4), distincte de la première, contenant au moins une table (20) de descriptifs comprenant au moins la localisation (OFF, L) de chaque sous-ensemble dans la section, au moins une clé (K) conditionnent l'accès à ce sous-ensemble et les droits (ACC) affectés à la clé,
ledit système étant adapté pour mettre en oeuvre le procédé selon l'une quelconque des revendications 1 à 4.

6. Système selon la revendication 5, comprenant en outre une troisième mémoire (3) de transfert, par sections entières, des informations contenues dans les fichiers.

7. Système selon la revendication 6, dans lequel la troisième mémoire (3) est une mémoire cache, la deuxième mémoire (4) étant une mémoire non volatile.

8. Carte à puce comprenant un système selon l'une quelconque des revendications 5 à 7.

## Claims

1. A method for sharing files recorded by non-divisible sections in a first memory (2), wherein:
dividing each section (10) is divided into subsets (Z) to which are respectively assigned specific access rights (ACC);
a table (20) of specifications comprising at least the location (OFF, L) of each subset in the section, at least one key (K) conditioning the access to this subset and the rights (ACC) assigned to the key is stored in a second memory (4) separate from the first one; and
the accesses to said subsets are conditioned to their respective specifications by a control performed by a microprocessor (1),
**characterized in that** the subsets (Z) of a same section (10) are imbricate in one another.

2. The method of claim 1, wherein said files are transferred between said first memory (2) and a third memory (3) by entire sections, the access control being performed based on the content of the third memory.

3. The method of claim 1, wherein the location comprises:
an offset value (OFF) of the beginning of the subset (Z) with respect to the beginning of the section (10); and
the length (L) of the subset.

4. The method of claim 1, wherein the specification of a subset further comprises an information about the type of data that it contains.

5. A system for sharing files recorded by non-divisible sections in a first memory (2), comprising:
a microprocessor (1) for managing the accesses to the data contained in the sections by subsets to which are respectively assigned specific access rights (ACC);
a second memory (4), separate from the first one, containing at least a table (20) of specifications comprising at least the location (OFF, L) of each subset in the section, at least one key (K) conditioning the access to this subset and the rights (ACC) assigned to the key,
said system being adapted for implementing the method of any of claims 1 to 4.

6. The system of claim 5, further comprising a third memory (3) for transferring, by entire sections, information contained in the files.

7. The system of claim 6, wherein the third memory (3) is a cache memory, the second memory (4) being a non-volatile memory.

8. A smart card comprising the system of any of claims 5 to 7.

## Patentansprüche

1. Verfahren zur gemeinsamen Nutzung (Sharing-Betrieb) von in nicht teilbaren Sektionen bzw. Abschnitten aufgezeichneten Dateien bzw. Files in einem ersten Speicher (2), wobei
- jede Sektion (10) in Untergruppen (Z) aufgetrennt ist, denen jeweils eigene Zugangsrechte (ACC) zugewiesen sind;
- in einem von dem ersten Speicher verschiedenen zweiten Speicher (4) eine Tabelle (20) von Deskriptoren gespeichert ist, die jeweils wenigstens die Lokalisierung (OFF, L) jeder Untergruppe in der Sektion, jeweils einen den Zugang zu dieser Untergruppe in der Sektion bedingenden Schlüssel (K) und die dem Schlüssel zugeordneten Rechte (ACC) umfassen; und
- die Zugänge zu den genannten Untergruppen ihren jeweiligen entsprechenden Deskriptoren mittels einer durch einen Mikroprozessor (1) ausgeführten Kontrolle bzw. Steuerung konditioniert zugeordnet sind,
**dadurch gekennzeichnet, dass** die Untergruppen (Z) einer selben Sektion (10) ineinander verschachtelt sind.

2. Verfahren nach Anspruch 1, bei welchem die genannten Dateien bzw. Files in ganzen Sektionen zwischen dem genannten ersten Speicher (2) und einem dritten Speicher (3) überführt werden, wobei die Zugangskontrolle auf der Grundlage des Inhalts des dritten Speichers erfolgt.

3. Verfahren nach Anspruch 1, bei welchem die Lokalisierung umfasst:
einen Wert der Verschiebung bzw. Versetzung (OFF) des Anfangs der Untergruppe (Z) relativ bezüglich dem Anfang der Sektion (10); und die Länge (L) der Untergruppe.

4. Verfahren nach Anspruch 1, bei welchem der Deskriptor einer Untergruppe des weiteren eine Information über den Typ der in ihr enthaltenen Daten umfasst.

5. System zur gemeinsamen Nutzung (Sharing-Betrieb) von in nicht teilbaren Sektionen bzw. Abschnitten aufgezeichneten Dateien bzw. Files in einem ersten Speicher (2), das System umfassend:
- einen Mikroprozessor (1) zur Verwaltung der Zugänge zu den in den Sektionen enthaltenen Daten nach Untergruppen, welchen jeweils eigene Zugangsrechte (ACC) zugewiesen sind;
- einen von dem ersten Speicher verschiedenen zweiten Speicher (4), welcher wenigstens eine Tabelle (20) von Deskriptoren enthält, die wenigstens die Lokalisierung (OFF, L) jeweils jeder Untergruppe in der Sektion, wenigstens einen den Zugang zu dieser Untergruppe konditionierenden Schlüssel (K) und die dem Schlüssel zugeordneten Rechte (ACC) umfassen,
wobei das System zur Ausführung des Verfahrens gemäß einem der Ansprüche 1 bis 4 ausgebildet ist.

6. System nach Anspruch 5, des weiteren umfassend einen dritten Speicher (3) zur Überführung der in den Dateien bzw. Files enthaltenen Daten in ganzen Sektionen.

7. System nach Anspruch 6, bei welchem der dritte Speicher (3) ein Cache-Speicher und der zweite Speicher (4) ein nicht-flüchtiger Speicher ist.

8. Chipkarte enthaltend ein System nach einem der Ansprüche 5 bis 7.
